# EUROPEAN PATENT SPECIFICATION

(11) **EP 3 939 737 B1**
(45) Date of publication and mention of the grant of the patent: **06.03.2024**
(21) Application number: 20770296.0
(22) Date of filing: 10.03.2020
(51) Int. Cl.: B23K 26/03, B23K 26/06, G02B 6/036, G02B 6/42

(54) **LASER PROCESSING DEVICE**
LASERBEARBEITUNGSVORRICHTUNG
DISPOSITIF DE TRAITEMENT AU LASER

(30) Priority: 11.03.2019 JP 2019043452
(43) Date of publication of application: 19.01.2022
(73) Proprietor: FUJIKURA LTD., Koto-ku Tokyo 135-8512 (JP)
(72) Inventor: MATSUOKA, Yuji, Sakura-shi, Chiba 285-8550 (JP); SAKAMOTO, Akira, Sakura-shi, Chiba 285-8550 (JP)
(74) Representative: Bardehle Pagenberg Partnerschaft mbB Patentanwälte Rechtsanwälte
(86) International application number: PCT/JP2020/010186
(87) International publication number: WO 2020/184540

(56) References cited:
- WO-A1-2012/102138
- WO-A1-2018/003604
- JP-A- 2001 001 170
- JP-A- 2003 103 387
- JP-A- 2015 093 284
- US-A- 4 839 493
- US-A- 6 008 897

## Description

### Technical Field

The present invention relates to a laser processing apparatus, and more particular to a laser processing apparatus that directs a laser beam to a workpiece to process the workpiece.

### Background Art

When a laser beam is directed to a workpiece to process the workpiece, vapor (plume) is generated during the processing. When the laser beam passes through the generated plume, the plume is overheated so as to produce plasma light. It has been known that such plasma light varies depending on the process conditions and the process state at that time. Therefore, measurement of plasma light produced during processing a workpiece allows the process conditions and the process state at that time to be grasped, thereby determining the quality of the laser processing or providing a feedback for the laser processing.

Many laser processing apparatuses that direct a laser beam to a workpiece to process the workpiece employ a fiber laser or a YAG laser as a laser light source (see, e.g., Patent Literature 1). The wavelength of a laser beam generated by such a laser light source is shorter than the wavelength of a laser beam generated by a carbon dioxide gas laser (10.6 µm). Laser beams having such a short wavelength are unlikely to be absorbed into ionized plume. Therefore, a small amount of plasma light is produced during the processing. Thus, it is difficult to grasp the process conditions and the process state accurately from the plasma light.

Patent literature 2 further discloses a laser apparatus for spectroscopic analysis of a heterogeneous material, comprising a first pulse laser light source operable to generate a pulse laser beam, a second pulse laser light source operable to generate a pulse laser beam, and an optical detection portion operable to detect plasma light produced at a piece to be analysed.

Patent literature 3 disclose a processing laser light source capable of generating and maintaining a plasma for analysis.

### Prior Art Literature

### Patent Literature

Patent Literature 1: JP 2018-144085 A
Patent Literature 2: US 6 008 897 A
Patent Literature 3: US 4 839 493 A

### Summary of the Invention

### Problem(s) to be Solved by the Invention

The present invention has been made in view of the above drawbacks in the prior art. It is, therefore, an object of the present invention to provide a laser processing apparatus that enables process conditions or a process state to be grasped with accuracy.

### Means for Solving Problem(s)

According to one aspect of the present invention, there is provided a laser processing apparatus that enables process conditions or a process state to be grasped with accuracy. The laser processing apparatus has a process laser light source operable to generate a process laser beam having a continuous energy density during a first period of time, a first optical system that directs the process laser beam to a surface of a workpiece, a pulse laser light source operable to generate a pulse laser beam having an energy density with a peak value that is higher than the energy density of the process laser beam during a second period of time that is a portion of the first period of time, a second optical system that directs the pulse laser beam to a process portion of the workpiece, and an optical detection portion operable to detect plasma light produced at the process portion of the workpiece.

### Brief Description of Drawings

Fig. 1 is a schematic diagram showing an overall configuration of a laser processing apparatus according to a first embodiment of the present invention.
Fig. 2 is a graph showing a temporal variation of outputs of laser beams used in the laser processing apparatus illustrated in Fig. 1.
Fig. 3 is a graph showing an example of a temporal variation in intensity of plasma light detected in the laser processing apparatus illustrated in Fig. 1.
Fig. 4 is a schematic view showing an overall configuration of a laser processing apparatus according to a second embodiment of the present invention.
Fig. 5 is a schematic view showing an overall configuration of a laser processing apparatus according to a third embodiment of the present invention.
Fig. 6 is a schematic cross-sectional view showing a configuration of a third optical fiber in the laser processing apparatus illustrated in Fig. 5.

### Mode(s) for Carrying Out the Invention

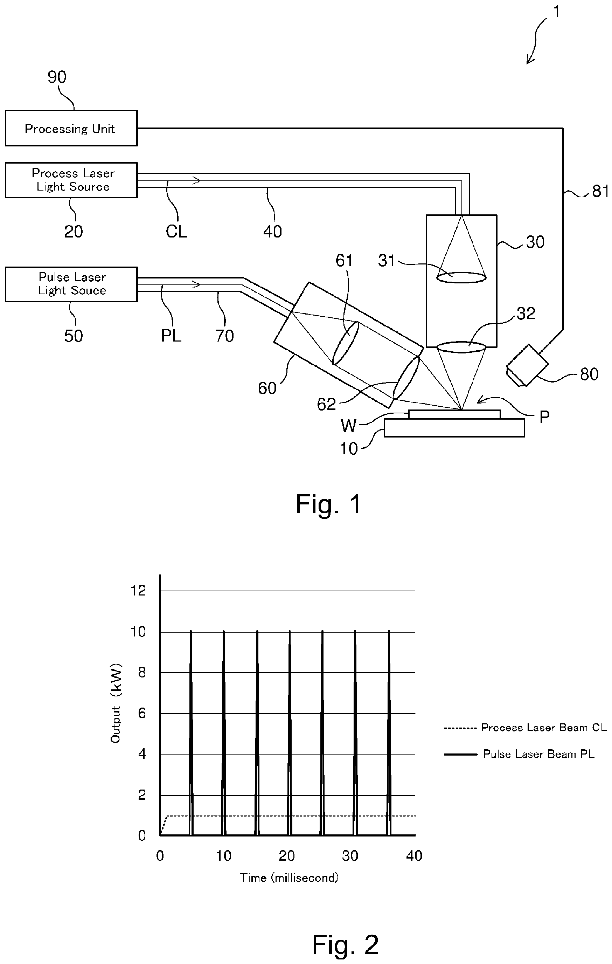

Embodiments of a laser processing apparatus according to the present invention will be described in detail below with reference to Figs. 1 to 6. In Figs. 1 to 6, the same or corresponding components are denoted by the same or corresponding reference numerals and will not be described below repetitively. Furthermore, in Figs. 1 to 6, the scales or dimensions of components may be exaggerated, or some components may be omitted.

Fig. 1 is a schematic diagram showing an overall configuration of a laser processing apparatus 1 according to a first embodiment of the present invention. As shown in Fig. 1, the laser processing apparatus 1 of the present embodiment has a stage 10 that holds a workpiece W thereon, a process laser light source 20 operable to generate a process laser beam CL, a first laser emission portion 30 for directing the process laser beam CL to a surface of the workpiece W, a first optical fiber 40 that connects between the process laser light source 20 and the first laser emission portion 30, a pulse laser light source 50 operable to generate a pulse laser beam PL, a second laser emission portion 60 for directing the pulse laser beam PL to a process portion P of the workpiece W, a second optical fiber 70 that connects between the pulse laser light source 50 and the second laser emission portion 60, and an optical detection portion 80 operable to detect plasma light produced at the process portion P of the workpiece W. As used herein, the term "process portion" refers to a process point on a surface of the workpiece W being processed by the process laser beam CL and a space including the vicinity of the process point.

For example, a fiber laser or a YAG laser can be used for the process laser light source 20. The process laser beam CL generated by the process laser light source 20 is what is called a continuous wave (CW) laser beam and has a continuous energy density during at least a certain period of time (e.g., 10 milliseconds) as shown in Fig. 2. The process laser beam CL propagates through a core of the first optical fiber 40 and enters the first laser emission portion 30.

The first laser emission portion 30 includes a collimator lens 31 that collimates the process laser beam CL and a condenser lens 32 that concentrates the process laser beam CL that has been collimated by the collimator lens 31 to a surface of the workpiece W. Those lenses 31 and 32 form a first optical system that directs the process laser beam CL to the surface of the workpiece W. Thus, the process laser beam CL having a high energy density is directed to the surface of the workpiece W, so that the temperature of the surface of the workpiece W increases. The workpiece W is then melted or evaporated to implement processing such as welding or cutting.

For example, a fiber laser or a YAG laser can be used for the pulse laser light source 50. The pulse laser beam PL generated by the pulse laser light source 50 is a pulsed beam having a pulse width of several tens of nanometers and a repetition frequency of about 100 Hz, for example, as shown in Fig. 2. The peak value of the energy density of the pulse laser beam PL is higher than the energy density of the process laser beam CL at that point of time. In the example illustrated in Fig. 2, the peak value of the output of the pulse laser beam PL is about 10 kW, and the average output of the process laser beam CL is about 1 kW.

The second laser emission portion 60 includes a collimator lens 61 that collimates the pulse laser beam PL and a condenser lens 62 that concentrates the pulse laser beam PL that has been collimated by the collimator lens 61 to a specific point in the process portion P of the workpiece W. Those lenses 61 and 62 form a second optical system that directs the pulse laser beam PL to the process portion P of the workpiece W. The focal point of the condenser lens 62 may be located at a process point on the surface of the workpiece W or may be located near the process point. In order to increase the intensity of plasma light as described below, it is preferable to locate the focal point of the condenser lens 62 within a plume produced from the surface of the workpiece W by irradiation of the process laser beam CL (for example, at a height of several millimeters to 50 mm from the surface of the workpiece W).

When the surface of the workpiece W is irradiated with the process laser beam CL, high-temperature metal vapor (plume) is produced at the process point of the workpiece W. When the laser beam transmits through the plume, the plume is overheated to produce plasma light. It has been known that the intensity of the plasma light varies depending on process conditions and a process state, such as variations in power of the process laser beam CL, a state of an assist gas, dirtiness of the surface of the workpiece W, compositional changes of the material being processed, variations of a gap between junctions being processed, and the like. Therefore, the current process conditions and process state can be grasped by detection of changes in intensity of the plasma light, thereby making it possible to determine the quality of the laser processing and provide a feedback for the laser processing.

The optical detection portion 80 is used to detect such plasma light. For example, the optical detection portion 80 includes any known optical sensor operable to detect visible light. The optical detection portion 80 is connected to a processing unit 90 by a signal line 81. The processing unit 90 is operable to determine the current process conditions and process state from the intensity of plasma light detected by the optical detection portion 80 and, optionally, to determine the quality of the laser processing or change an output of the process laser beam CL generated by the process laser light source 20.

As described above, in the present embodiment, the pulse laser beam PL having an energy density with a peak value that is higher than the energy density of the process laser beam CL is directed to the process portion P of the workpiece W. The intensity of plasma light produced from a plume is in proportion to the amount of the produced plume and an energy density of light transmitting through the plume. Therefore, the intensity of plasma light produced from the plume can be increased by irradiating the process portion P (plume) of the workpiece W with the pulse laser beam PL having a high energy density. Accordingly, detection of the plasma light by the optical detection portion 80 is facilitated so that changes in intensity of the plasma light can be detected with higher accuracy. Furthermore, the pulse laser beam PL is directed to the process portion P (plume) independently of the process laser beam CL. Therefore, even when parameters for the process laser beam CL are varied according to the process conditions, changes in intensity of the plasma light can be detected more accurately by the optical detection portion 80 without influences from the varied parameters for the process laser beam CL. As a result, the current process conditions and process state can be grasped with higher accuracy.

The peak value of the energy density of the pulse laser beam PL is higher than the energy density of the process laser beam CL at that point of time. Since the pulse laser beam PL is a pulse wave having a short pulse width, the pulse laser beam PL exerts less influence on the surface (process point) of the workpiece W. In other words, a time-integrated value of the output of the pulse laser beam PL (average output) is less than a time-integrated value of the output of the process laser beam CL (average output) as illustrated in Fig. 2. Therefore, the pulse laser beam PL exerts less influence on the surface (process point) of the workpiece W. From this point of view, for example, it is preferable to adjust an output of the pulse laser beam PL per unit time to be lower than a tenth of an output of the process laser beam CL per unit time.

It is preferable to keep a constant peak value of the energy density of the pulse laser beam PL. When the peak value of the energy density of the pulse laser beam PL is held constant, the energy density of the pulse laser beam PL directed to the plume is continuously held constant even when the energy density of the process laser beam CL is varied according to the process conditions. Accordingly, changes in intensity of the plasma light can be detected more accurately by the optical detection portion 80 without influences from the varied energy density of the process laser beam CL.

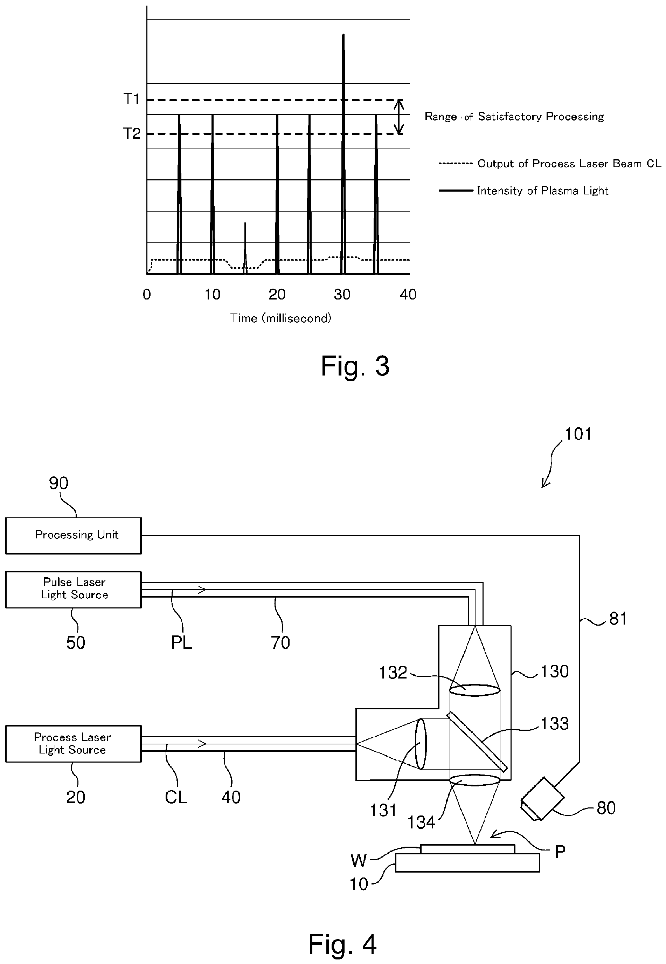

For example, the following method may be employed to determine the quality of laser processing using the intensity of the plasma light. As shown in Fig. 3, an upper limit T1 and a lower limit T2 for the intensity of plasma light to be detected by the optical detection portion 80 are preset and stored in a storage device within the processing unit 90. The processing unit 90 compares the intensity of plasma light detected by the optical detection portion 80 to the upper limit T1 and the lower limit T2, respectively, and determines that processing is being conducted satisfactorily if the intensity of plasma light detected by the optical detection portion 80 is between the upper limit T1 and the lower limit T2. On the other hand, if the intensity of plasma light detected by the optical detection portion 80 is greater than the upper limit T1 or smaller than the lower limit T2, the processing unit 90 determines that the processing is not being conducted satisfactorily and, for example, may change the parameters for the process laser beam CL to be generated by the process laser light source 20.

Fig. 4 is a schematic diagram showing an overall configuration of a laser processing apparatus 101 according to a second embodiment of the present invention. The laser processing apparatus 101 of the present embodiment has a single laser emission portion 130 instead of the first laser emission portion 30 and the second laser emission portion 60 of the aforementioned first embodiment. The laser emission portion 130 is connected to the process laser light source 20 and the pulse laser light source 50 by a first optical fiber 40 and a second optical fiber 70, respectively.

The laser emission portion 130 includes a collimator lens 131 that collimates the process laser beam CL, a collimator lens 132 that collimates the pulse laser beam PL, a mirror 133, and a condenser lens 134. The mirror 133 is provided as a dichroic mirror configured to reflect light having a wavelength of the process laser beam CL but transmit light having a wavelength of the pulse laser beam PL.

The condenser lens 134 is configured to concentrate the process laser beam CL that has been collimated by the collimator lens 131 and reflected on the mirror 133 to a surface of the workpiece W and to concentrate the pulse laser beam PL that has been collimated by the collimator lens 132 and transmitted through the mirror 133 to a specific point in the process portion P of the workpiece W. The position of the collimator lens 132 can be adjusted to concentrate the pulse laser beam PL to the process point on the surface of the workpiece W or near the process point (plume). Furthermore, an F value of the collimator lens 132 can relatively be increased to enhance the energy density of the pulse laser beam PL to be concentrated by the condenser lens 134.

Thus, according to the present embodiment, the collimator lens 131, the mirror 133, and the condenser lens 134 form a first optical system that directs the process laser beam CL to the surface of the workpiece W, whereas the collimator lens 132, the mirror 133, and the condenser lens 134 form a second optical system that directs the pulse laser beam PL to the process portion P of the workpiece W. In other words, the condenser lens 134 is common to the first optical system and the second optical system. Thus, the number of required optical components can be decreased, and a simple configuration can be implemented.

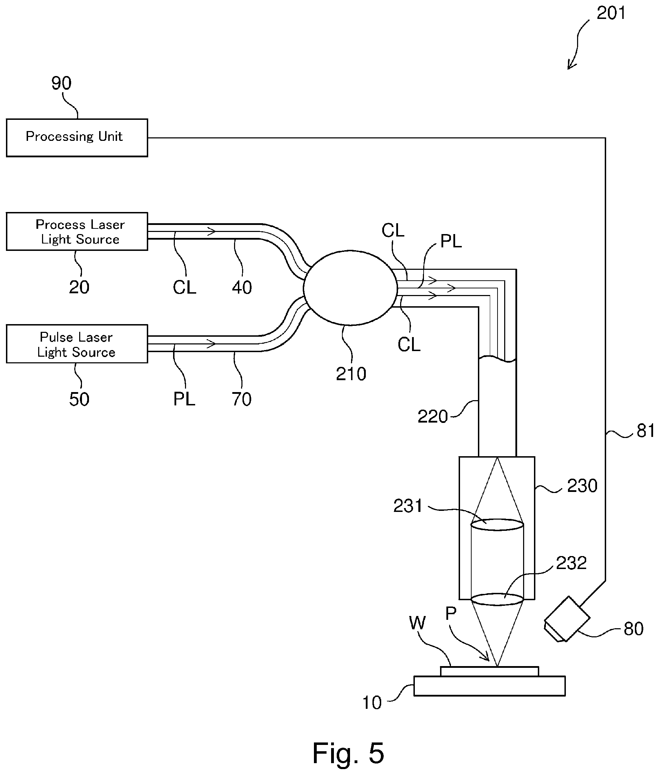

Fig. 5 is a schematic diagram showing an overall configuration of a laser processing apparatus 201 according to a third embodiment of the present invention. The laser processing apparatus 201 of the present embodiment has an optical combiner 210 connected to the first optical fiber 40 and the second optical fiber 70, a third optical fiber 220 extending from the optical combiner 210, and a laser emission portion 230 connected to the third optical fiber 220, instead of the laser emission portion 130 of the second embodiment.

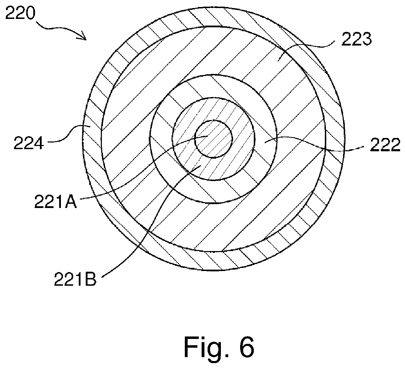

The optical combiner 210 is operable to combine the process laser beam CL propagating through a core of the first optical fiber 40 and the pulse laser beam PL propagating through a core of the second optical fiber 70 with each other and output the combined beam to the third optical fiber 220. For example, as shown in Fig. 6, the third optical fiber 220 comprises a double-clad fiber including an inner core 221A, an outer core 221B located around the inner core 221A with a refractive index lower than a refractive index of the inner core 221A, an inner cladding 222 located around the outer core 221B with a refractive index lower than the refractive index of the outer core 221B, an outer cladding 223 located around the inner cladding 222 with a refractive index lower than the refractive index of the inner cladding 222, and a covering 224 that covers a circumference of the outer cladding. For example, the inner core 221A has a diameter of 30 µm, and the outer core 221B has a diameter of 50 µm.

The laser emission portion 230 includes a collimator lens 231 that collimates the process laser beam CL and the pulse laser beam PL and a condenser lens 232 that concentrates the process laser beam CL and the pulse laser beam PL. Thus, according to the present embodiment, the collimator lens 231 and the condenser lens 232 form a shared optical system, which serves as both of a first optical system that directs the process laser beam CL to the surface of the workpiece W and a second optical system that directs the pulse laser beam PL to the process portion P of the workpiece W. With use of such a shared optical system, the number of required optical components can be decreased, and a simple configuration can be implemented.

The configuration of connection between the optical combiner 210 and the third optical fiber 220 is not limited to a specific one. For example, the pulse laser beam PL outputted from the optical combiner 210 may be coupled to the inner core 221A of the third optical fiber 220, and the process laser beam CL outputted from the optical combiner 210 may be coupled to the outer core 221B of the third optical fiber 220. Alternatively, the process laser beam CL may be coupled to the inner cladding 222 of the third optical fiber 220. Thus, since the pulse laser beam PL is coupled to the inner core 221A of the third optical fiber 220, the pulse laser beam PL having a high energy density can be transmitted to the laser emission portion 230, so that the energy density of the pulse laser beam PL to be to be concentrated by the condenser lens 134 can be enhanced. Therefore, the pulse laser beam PL having a high energy density can be directed to the process portion P (plume) of the workpiece W. Accordingly, the intensity of plasma light produced from the plume can be increased. Thus, detection of the plasma light by the optical detection portion 80 is facilitated so that changes in intensity of the plasma light can be detected with higher accuracy.

Particularly, the inner core 221A of the third optical fiber 220 may preferably be able to transmit single-mode light or few-mode light. In the case where the pulse laser beam PL is coupled to the inner core 221A through which a small number of modes propagate, the peak value of the energy density of the pulse laser beam PL is prevented from being lowered during which the pulse laser beam PL propagates through the inner core 221A. Therefore, the pulse laser beam PL having a high energy density can be directed to the process portion P (plume) of the workpiece W. There is another advantage that the pulse width of the pulse laser beam PL is unlikely to increase.

In this case, the pulse laser beam PL may have a wavelength that is shorter than a wavelength of the process laser beam CL. For example, the process laser beam CL may have a wavelength of 1070 nm, and the pulse laser beam PL may have a wavelength of 800 nm to 900 nm. With this configuration, chromatic aberration of the condenser lens 232 can be utilized to direct the process laser beam CL to the surface of the workpiece W and to direct the pulse laser beam PL to the plume, which is located above the surface of the workpiece W.

Although some preferred embodiments of the present invention have been described, the present invention is not limited to the aforementioned embodiments. It should be understood that various different forms may be applied to the present invention within the scope of the appended claims.

As described above, according to one aspect of the present invention, there is provided a laser processing apparatus that enables process conditions or a process state to be grasped with accuracy. The laser processing apparatus has a process laser light source operable to generate a process laser beam having a continuous energy density during a certain period of time, a first optical system that directs the process laser beam to a surface of a workpiece, a pulse laser light source operable to generate a pulse laser beam having an energy density with a peak value that is higher than the energy density of the process laser beam, a second optical system that directs the pulse laser beam to a process portion of the workpiece, and an optical detection portion operable to detect plasma light produced at the process portion of the workpiece.

In this manner, since the pulse laser beam having an energy density with a peak value that is higher than the energy density of the process laser beam is directed to the process portion (plume) of the workpiece, the intensity of plasma light produced from the plume can be increased. Thus, detection of the plasma light by the optical detection portion is facilitated so that changes in intensity of the plasma light can be detected with higher accuracy. Furthermore, the pulse laser beam is directed to the process portion (plume) independently of the process laser beam. Therefore, even when parameters for the process laser beam are varied according to process conditions, changes in intensity of the plasma light can be detected more accurately by the optical detection portion without influences from the varied parameters for the process laser beam. As a result, the current process conditions and process state can be grasped with higher accuracy.

The second optical system may preferably be configured to concentrate the pulse laser beam to a plume portion produced when the process laser beam is directed to the surface of the workpiece. With this configuration, the intensity of plasma light produced at the plume portion can be increased.

The peak value of the energy density of the pulse laser beam may preferably be constant. When the peak value of the energy density of the pulse laser beam is held constant, the energy density of the pulse laser beam directed to the plume is continuously held constant even when the energy density of the process laser beam is varied according to the process conditions. Accordingly, changes in intensity of the plasma light can be detected more accurately by the optical detection portion without influences from the varied energy density of the process laser beam.

An output of the pulse laser beam per unit time may preferably be lower than a tenth of an output of the process laser beam per unit time. This configuration allows the pulse laser beam to exert less influence on the surface of the workpiece.

The first optical system and the second optical system may use at least one lens in common. Since at least one lens is used in common by the first optical system and the second optical system, the number of required optical components can be decreased, and a simple configuration can be implemented.

The laser processing apparatus may further include a first optical fiber connected to the process laser light source, a second optical fiber connected to the pulse laser light source, a shared optical system that functions as both of the first optical system and the second optical system, a third optical fiber connected to the shared optical system, and an optical combiner operable to combine the process laser beam from the first optical fiber and the pulse laser beam from the second optical fiber with each other and output the combined beam to the third optical fiber. Since the shared optical system is used for propagation of the process laser beam and the pulse laser beam, the number of required optical components can be decreased while a simple configuration can be implemented.

The third optical fiber may preferably include an inner core through which the pulse laser beam propagates, an outer core covering a circumference of the inner core and having a refractive index lower than a refractive index of the inner core, and a cladding covering a circumference of the outer core and having a refractive index lower than the refractive index of the outer core. Furthermore, the inner core of the third optical fiber may preferably be capable of transmitting single-mode light or few-mode light. Thus, the pulse laser beam is coupled to the inner core through which a small number of modes propagate. Therefore, the peak value of the energy density of the pulse laser beam is prevented from being lowered during which the pulse laser beam propagates through the inner core. Accordingly, the pulse laser beam having a high energy density can be transmitted to the shared optical system. Consequently, the pulse laser beam having a high energy density can be directed to the process portion of the workpiece, so that the intensity of plasma light produced from the plume can be increased. In this manner, detection of the plasma light by the optical detection portion is facilitated so that changes in intensity of the plasma light can be detected with higher accuracy.

The pulse laser beam may have a wavelength shorter than a wavelength of the process laser beam. Particularly, when the pulse laser beam has a wavelength shorter than a wavelength of the process laser beam in a case where the aforementioned shared optical system is used, chromatic aberration of the lens in the shared optical system can be utilized to direct the process laser beam to the surface of the workpiece and to direct the pulse laser beam to the plume, which is located above the surface of the workpiece.

According to the present invention, the intensity of plasma light produced from plume can be increased. Thus, detection of the plasma light by the optical detection portion is facilitated so that changes in intensity of the plasma light can be detected more accurately by the optical detection portion without influences from the varied parameters for the process laser beam. As a result, the current process conditions and process state can be grasped with higher accuracy.

### Industrial Applicability

The present invention is suitably used for a laser processing apparatus that directs a laser beam to a workpiece to process the workpiece.

### Description of Reference Numerals and Signs

- 1: Laser processing apparatus
- 10: Stage
- 20: Process laser light source
- 30: First laser emission portion
- 31: Collimator lens
- 32: Condenser lens
- 40: First optical fiber
- 50: Pulse laser light source
- 60: Second laser emission portion
- 61: Collimator lens
- 62: Condenser lens
- 70: Second optical fiber
- 80: Optical detection portion
- 90: Processing unit
- 101: Laser processing apparatus
- 130: Laser emission portion
- 131, 132: Collimator lens
- 133: Mirror
- 134: Condenser lens
- 201: Laser processing apparatus
- 210: Optical combiner
- 220: Third optical fiber
- 221A: Inner core
- 221B: Outer core
- 222: Inner cladding
- 223: Outer cladding
- 224: Covering
- 230: Laser emission portion
- 231: Collimator lens
- 232: Condenser lens
- P: Process portion
- W: Workpiece
- CL: Process laser beam
- PL: Pulse laser beam

## Claims

1. A laser processing apparatus (1, 101, 201) comprising:
a process laser light source (20) operable to generate a process laser beam (CL) having a continuous energy density during a first period of time;
a first optical system (31, 32, 131, 133, 134) that directs the process laser beam (CL) to a surface of a workpiece (W);
a pulse laser light source (50) operable to generate a pulse laser beam (PL) having an energy density with a peak value that is higher than the energy density of the process laser beam (CL) during a second period of time that is a portion of the first period of time;
a second optical system (61, 62, 132, 133, 134) that directs the pulse laser beam (PL) to a process portion (P) of the workpiece; and
an optical detection portion operable to detect plasma light produced at the process portion of the workpiece (W).

2. The laser processing apparatus (1, 101, 201) as recited in claim 1, wherein the second optical system (61, 62, 132, 133, 134) is configured to concentrate the pulse laser beam (PL) to a plume portion produced when the process laser beam (PL) is directed to the surface of the workpiece (W).

3. The laser processing apparatus (1, 101, 201) as recited in claim 1 or 2,
wherein the peak value of the energy density of the pulse laser beam (PL) is constant.

4. The laser processing apparatus (1, 101, 201) as recited in any one of claims 1 to 3, wherein an output of the pulse laser beam (PL) per unit time is lower than a tenth of an output of the process laser beam (CL) per unit time.

5. The laser processing apparatus (1, 101, 201) as recited in any one of claims 1 to 4, wherein the first optical system (131, 133, 134) and the second optical system (132, 133, 134) use at least one lens (134) in common.

6. The laser processing apparatus (1, 101, 201) as recited in any one of claims 1 to 5, further comprising:
a first optical fiber (40) connected to the process laser light source (20);
a second optical fiber (70) connected to the pulse laser light source (50);
a shared optical system (231, 232) that functions as both of the first optical system and the second optical system;
a third optical fiber (220) connected to the shared optical system (231, 232); and
an optical combiner (210) operable to combine the process laser beam (CL) from the first optical fiber (40) and the pulse laser beam (PL) from the second optical fiber (70) with each other and output the combined beam to the third optical fiber (220).

7. The laser processing apparatus (1, 101, 201) as recited in claim 6,
wherein the third optical fiber (220) includes:
an inner core (221A) through which the pulse laser beam (PL) propagates,
an outer core (221B) covering a circumference of the inner core (221A) and having a refractive index lower than a refractive index of the inner core (221A), and
a cladding (222) covering a circumference of the outer core (221B) and having a refractive index lower than the refractive index of the outer core (221B).

8. The laser processing apparatus (1, 101, 201) as recited in claim 7,
wherein the inner core (221A) of the third optical fiber (220) is capable of transmitting single-mode light or few-mode light.

9. The laser processing apparatus (1, 101, 201) as recited in any one of claims 1 to 8, wherein the pulse laser beam (PL) has a wavelength shorter than a wavelength of the process laser beam (CL).

## Patentansprüche

1. Laserbearbeitungsvorrichtung (1, 101, 201), umfassend:
eine Prozesslaserlichtquelle (20), die betreibbar ist, um einen Prozesslaserstrahl (CL) mit einer kontinuierlichen Energiedichte während eines ersten Zeitraums zu erzeugen;
ein erstes optisches System (31, 32, 131, 133, 134), das den Prozesslaserstrahl (CL) auf eine Oberfläche eines Werkstücks (W) richtet;
eine Pulslaserlichtquelle (50), die betreibbar ist, um einen Pulslaserstrahl (PL) mit einer Energiedichte mit einem Spitzenwert zu erzeugen, der höher als die Energiedichte des Prozesslaserstrahls (CL) während eines zweiten Zeitraums ist, der ein Teil des ersten Zeitraums ist;
ein zweites optisches System (61, 62, 132, 133, 134), das den Pulslaserstrahl (PL) auf einen Prozessabschnitt (P) des Werkstücks richtet; und
einen optischen Detektionsabschnitt, der betreibbar ist, um Plasmalicht zu detektieren, das am Prozessabschnitt des Werkstücks (W) erzeugt wird.

2. Laserbearbeitungsvorrichtung (1, 101, 201) nach Anspruch 1, wobei das zweite optische System (61, 62, 132, 133, 134) konfiguriert ist, um den Pulslaserstrahl (PL) auf einen Fahnenabschnitt zu konzentrieren, der erzeugt wird, wenn der Prozesslaserstrahl (PL) auf die Oberfläche des Werkstücks (W) gerichtet wird.

3. Laserbearbeitungsvorrichtung (1, 101, 201) nach Anspruch 1 oder 2, wobei der Spitzenwert der Energiedichte des Pulslaserstrahls (PL) konstant ist.

4. Laserbearbeitungsvorrichtung (1, 101, 201) nach einem der Ansprüche 1 bis 3, wobei eine Ausgabe des Pulslaserstrahls (PL) pro Zeiteinheit niedriger als ein Zehntel einer Ausgabe des Prozesslaserstrahls (CL) pro Zeiteinheit ist.

5. Laserbearbeitungsvorrichtung (1, 101, 201) nach einem der Ansprüche 1 bis 4, wobei das erste optische System (131, 133, 134) und das zweite optische System (132, 133, 134) mindestens eine Linse (134) gemeinsam verwenden.

6. Laserbearbeitungsvorrichtung (1, 101, 201) nach einem der Ansprüche 1 bis 5, ferner umfassend:
eine erste optische Faser (40), die mit der Prozesslaserlichtquelle (20) verbunden ist;
eine zweite optische Faser (70), die mit der Pulslaserlichtquelle (50) verbunden ist;
ein gemeinsames optisches System (231, 232), das sowohl als erstes optisches System als auch als zweites optisches System fungiert;
eine dritte optische Faser (220), die mit dem gemeinsamen optischen System (231, 232) verbunden ist; und
einen optischen Kombinierer (210), der betreibbar ist, um den Prozesslaserstrahl (CL) von der ersten optischen Faser (40) und den Pulslaserstrahl (PL) von der zweiten optischen Faser (70) miteinander zu kombinieren und den kombinierten Strahl an die dritte optische Faser (220) auszugeben.

7. Laserbearbeitungsvorrichtung (1, 101, 201) nach Anspruch 6, wobei die dritte optische Faser (220) umfasst:
einen inneren Kern (221A), durch den sich der Pulslaserstrahl (PL) ausbreitet,
einen äußeren Kern (221B), der einen Umfang des inneren Kerns (221A) bedeckt und einen Brechungsindex aufweist, der niedriger als ein Brechungsindex des inneren Kerns (221A) ist, und
einen Mantel (222), der einen Umfang des äußeren Kerns (221B) bedeckt und einen Brechungsindex aufweist, der niedriger als der Brechungsindex des äußeren Kerns (221B) ist.

8. Laserbearbeitungsvorrichtung (1, 101, 201) nach Anspruch 7, wobei der innere Kern (221A) der dritten optischen Faser (220) in der Lage ist, Einmodenlicht oder Wenigmodenlicht zu übertragen.

9. Laserbearbeitungsvorrichtung (1, 101, 201) nach einem der Ansprüche 1 bis 8, wobei der Pulslaserstrahl (PL) eine Wellenlänge aufweist, die kürzer als eine Wellenlänge des Prozesslaserstrahls (CL) ist.

## Revendications

1. Un appareil de traitement laser (1, 101, 201) comprenant :
une source de lumière laser de traitement (20) actionnable pour générer pendant une première période de temps un faisceau laser de traitement (CL) ayant une densité d'énergie continue ;
un premier système optique (31, 32, 131, 133, 134) qui dirige le faisceau laser de traitement (CL) sur une surface d'une pièce d'œuvre (W) ;
une source de lumière laser impulsionnelle (50) actionnable pour générer, pendant une seconde période de temps qui est une partie de la première période de temps, un faisceau laser impulsionnel (PL) ayant une densité d'énergie avec une valeur de crête qui est supérieure à la densité d'énergie du faisceau laser de traitement (CL) ;
un second système optique (61, 62, 132, 133, 134) qui dirige le faisceau de lumière laser impulsionnelle (PL) sur une partie de traitement (P) de la pièce d'oeuvre ; et
une partie de détection optique fonctionnelle pour détecter la lumière de plasma produite au niveau de la partie de traitement de la pièce d'œuvre (W).

2. L'appareil de traitement laser (1, 101, 201) tel qu'énoncé dans la revendication 1, dans lequel le second système optique (61, 62, 132, 133, 134) est configuré pour concentrer le faisceau laser impulsionnel (PL) en une partie d'aigrette produite lorsque le faisceau laser de traitement (PL) est dirigé sur la surface de la pièce d'oeuvre (W).

3. L'appareil de traitement laser (1, 101, 201) tel qu'énoncé dans la revendication 1 ou 2, dans lequel la valeur de crête de la densité d'énergie du faisceau laser impulsionnel (PL) est constante.

4. L'appareil de traitement laser (1, 101, 201) tel qu'énoncé dans l'une des revendications 1 à 3, dans lequel une sortie du faisceau laser impulsionnel (PL) par unité de temps est inférieure à un dixième d'une sortie du faisceau laser de traitement (CL) par unité de temps.

5. L'appareil de traitement laser (1, 101, 201) tel qu'énoncé dans l'une des revendications 1 à 4, dans lequel le premier système optique (131, 133, 134) et le second système optique (132, 133, 134) ont en commun au moins une lentille (134).

6. L'appareil de traitement laser (1, 101, 201) tel qu'énoncé dans l'une des revendications 1 à 5, comprenant en outre :
une première fibre optique (40) reliée à la source de lumière laser de traitement (20) ;
une seconde fibre optique (70) reliée à la source de lumière laser impulsionnelle (50) ;
un système optique partagé (231, 232) qui joue à la fois le rôle du premier système optique et celui du second système optique ;
une troisième fibre optique (220) reliée au système optique partagé (231, 232) ; et
un combineur optique (210) fonctionnel pour combiner l'un avec l'autre le faisceau laser de traitement (CL) issu de la première fibre optique (40) avec le faisceau laser impulsionnel (PL) issu de la seconde fibre optique (70), et pour délivrer en sortie à la troisième fibre optique (220) le faisceau combiné.

7. L'appareil de traitement laser (1, 101, 201) tel qu'énoncé dans la revendication 6, dans lequel la troisième fibre optique (220) comprend :
un coeur interne (221A) au travers duquel se propage le faisceau laser impulsionnel (PL),
un coeur externe (221B) recouvrant une circonférence du coeur interne (221A) et présentant un indice de réfraction inférieur à un indice de réfraction du coeur interne (221A), et
une gaine (222) recouvrant une circonférence du coeur externe (221B) et présentant un indice de réfraction inférieur à l'indice de réfraction du coeur externe (221B) .

8. L'appareil de traitement laser (1, 101, 201) tel qu'énoncé dans la revendication 7, dans lequel le coeur interne (221A) de la troisième fibre optique (220) est capable de transmettre de la lumière sur un seul mode ou sur quelques modes.

9. L'appareil de traitement laser (1, 101, 201) tel qu'énoncé dans l'une des revendications 1 à 8, dans lequel le faisceau laser impulsionnel (PL) possède une longueur d'onde plus courte qu'une longueur d'onde du faisceau laser de traitement (CL).
